# EUROPÄISCHE PATENTANMELDUNG

(11) **EP 1 985 848 A2**
(43) Veröffentlichungstag der Anmeldung: **29.10.2008**
(21) Anmeldenummer: 08004087.6
(22) Anmeldetag: 05.03.2008
(51) Int. Cl.: F03D 7/00, F03D 7/04, F03D 11/00

(54) **Sensormodul und Sensornetzwerk zur Überwachung einer Windenergieanlage sowie entsprechende Überwachungsverfahren**

(30) Priorität: 12.03.2007 DE 102007011835
(71) Anmelder: µ-Sen GmbH, 07407 Rudolstadt (DE)
(72) Erfinder: Oertel, Ulrich, 07743 Jena (DE); Biehl, Steffen, Dr., 07407 Uhlstädt-Kirchhasel (DE); Iwert, Thomas, 39307 Rossdorf (DE); Fritsch, Holger, 39114 Magdeburg (DE)
(74) Vertreter: Beier, Ralph

(57) **Zusammenfassung**

Die Erfindung betrifft ein Sensormodul (9-18) zur Zustandsüberwachung einer Maschine (1), insbesondere einer Windkraftanlage, mit mindestens einem Sensor zur Messung einer analogen Zustandsgröße der Maschine (1) und zur Abgabe von Sensordaten, welche die gemessene Zustandsgröße der Maschine (1) wiedergeben, und einer Datenschnittstelle zur Übertragung der Sensordaten zu einer separaten und räumlich getrennten Auswertungseinheit (19). Die Erfindung sieht zusätzlich einen Analog/Digital-Wandler vor, der mit dem Sensor und mit der Datenschnittstelle verbunden ist und die gemessene analoge Zustandsgröße in die digitalen Sensordaten konvertiert. Weiterhin umfasst die Erfindung ein entsprechendes Sensornetzwerk und ein zugehöriges Überwachungsverfahren.

## Beschreibung

Die Erfindung betrifft ein Sensormodul und ein Sensornetzwerk zur Zustandsüberwachung einer Maschine, insbesondere einer Windenergieanlage, sowie ein entsprechendes Überwachungsverfahren gemäß den nebengeordneten Ansprüchen.

Zur Fernüberwachung von Windenergieanlagen werden sogenannte Condition Monitoring Systems (CMS) eingesetzt, die mittels mehrerer Sensoren Zustandsgrößen der Windenergieanlage überwachen, wie beispielsweise mechanische Schwingungen und Bauteilneigungen. Die in der Windenergieanlage räumlich verteilt angeordneten Sensoren übertragen die jeweiligen Sensordaten hierbei in analoger Form zu einer zentralen Auswertungseinheit, die ebenfalls in der Windenergieanlage angeordnet sein kann und die gemessenen Sensordaten zwischenspeichert. Der Betreiber der Windenergieanlage kann die in der Auswertungseinheit zwischengespeicherten Sensordaten dann bei Bedarf telematisch (z.B. über eine Telefonwählverbindung) abfragen, um aktuelle oder bevorstehende Schäden der jeweiligen Windenergieanlage zu erkennen.

Problematisch ist hierbei die Störanfälligkeit der analogen Übertragung der Sensordaten von den einzelnen Sensor zu der zentralen Auswertungseinheit innerhalb der Windenergieanlage.

Darüber hinaus sind die bekannten CMS nur schwer auf eine größere Anzahl von parallel abtastbaren Sensoren erweiterbar, da die Auswertungseinheit in der Regel nur eine begrenzte Anzahl von Eingangskanälen hat.

Der Erfindung liegt deshalb die Aufgabe zugrunde, eine verbesserte Vorrichtung und ein entsprechendes Verfahren zur Zustandsüberwachung einer Maschine zu schaffen.

Diese Aufgabe wird durch ein erfindungsgemäßes Sensormodul, ein erfindungsgemäßes Sensornetzwerk bzw. ein erfindungsgemäßes Überwachungsverfahren gemäß den nebengeordneten Ansprüchen gelöst.

Die Erfindung beruht auf der technischen Erkenntnis, dass die analoge Übertragung der Sensordaten von den einzelnen Sensoren zu der zentralen Auswertungseinheit wesentlich störanfälliger ist als eine digitale Datenübertragung.

Die Erfindung umfasst deshalb die allgemeine technische Lehre, die Sensordaten von den einzelnen Sensormodulen zu der zentralen Auswertungseinheit in digitaler Form zu übertragen, um die Störanfälligkeit der Datenübertragung zu senken. Die einzelnen Sensormodule weisen deshalb im Rahmen der Erfindung nicht nur einen oder mehrere Sensoren bzw. Sensoreingänge auf, um die interessierenden Zustandsgrößen der zu überwachenden Maschine zu messen. Vielmehr enthalten die erfindungsgemäßen Sensormodule zusätzlich einen Analog/Digital-Wandler, der die gemessene analoge Zustandsgröße in digitale Sensordaten umwandelt, die dann über eine digitale Datenschnittstelle in digitaler Form zu der zentralen Auswertungseinheit übertragen werden.

Das erfindungsgemäße Sensormodul kann auch einen oder mehrere digitale Eingänge zur Erfassung eines Drehzahlsignals oder zur Zeitsynchronisation aufweisen.

In einem bevorzugten Ausführungsbeispiel der Erfindung weisen die einzelnen Sensormodule auch einen Verstärker mit einem einstellbaren Verstärkungsfaktor auf, wobei der Verstärker die analoge Zustandsgröße verstärkt, die von dem Sensor des jeweiligen Sensormoduls gemessen wird.

Besonders vorteilhaft ist es hierbei, wenn der Verstärkungsfaktor über die Datenschnittstelle von der zentralen Auswertungseinheit ferneinstellbar ist. Die Auswertungseinheit kann dann über die digitale Datenschnittstelle Einstellbefehle zu den einzelnen Sensormodulen übertragen, um den gewünschten Verstärkungsfaktor einzustellen, wobei in den verschiedenen Sensormodulen unterschiedliche Verstärkungsfaktoren eingestellt werden können.

Weiterhin weisen die erfindungsgemäßen Sensormodule vorzugsweise ein Anti-Aliasing-Filter auf, das dem Analog/Digital-Wandler vorgeschaltet ist und die gemessene analoge Zustandsgröße vor der Digitalisierung filtert. Derartige Anti-Aliasing-Filter sind an sich aus dem Stand der Technik bekannt und müssen deshalb nicht weiter beschrieben werden.

In dem bevorzugten Ausführungsbeispiel der Erfindung weist das Anti-Aliasing-Filter eine einstellbare Filterfrequenz bzw. Filtercharakteristik auf, wobei die Filterfrequenz bzw. Filtercharakteristik des Anti-Aliasing-Filters über die Datenschnittstelle von der Auswertungseinheit ferneinstellbar ist. Die Auswertungseinheit kann dann für die einzelnen Sensormodule individuell die Filterfrequenz bzw. Filtercharakteristik der einzelnen Anti-Aliasing-Filter so vorgeben, dass der bekannte Alias-Effekt unterdrückt wird.

Darüber hinaus weisen die einzelnen Sensormodule vorzugsweise einen integrierten Zeitgeber auf, der ein Zeitsignal erzeugt, das mit den Sensordaten über die Datenschnittstelle zu der Auswertungseinheit übertragen wird. Dies ermöglicht es der zentralen Auswertungseinheit, die Sensordaten verschiedener Sensormodule in zeitlicher Synchronisation auszuwerten.

Hierbei kann der Zeitgeber über die Datenschnittstelle von der Auswertungseinheit synchronisierbar sein. Beispielsweise kann die Auswertungseinheit über die Datenschnittstelle ein Reset-Signal an die Zeitgeber der einzelnen Sensormodule übertragen, um diese gemeinsam zurückzusetzen und damit zu synchronisieren. Es besteht im Rahmen der Erfindung jedoch auch die Möglichkeit, dass die zentrale Auswertungseinheit ein aktuelles Zeitsignal über die Datenschnittstelle zu den Zeitgebern der einzelnen Sensormodule überträgt, um diese auf die aktuelle Zeit einzustellen.

Weiterhin ist zu erwähnen, dass die einzelnen Sensormodule vorzugsweise eine breitbandige Messung der analogen Zustandsgröße durchführen, wobei Abtastraten bis zu einigen kHz möglich sind. Dies ist vorteilhaft, weil sich ein Bauteilversagen beispielsweise bei Wälzlagern durch Anregung von Eigenfrequenzen der Maschine äußert.

Ferner besteht im Rahmen der Erfindung die Möglichkeit, dass die einzelnen Sensormodule von der Auswertungseinheit mit Strom versorgt werden. Die einzelnen Sensormodule können jedoch stattdessen auch eine autarke Stromversorgung aufweisen, beispielsweise in Form von Batterien, Akkumulatoren oder Solarzellen.

Hinsichtlich der zu messenden analogen Zustandsgröße der zu überwachenden Maschine bestehen im Rahmen der Erfindung vielfältige Möglichkeiten. Beispielsweise können die einzelnen Sensoren eine Beschleunigung, eine Geschwindigkeit oder eine Wegstrecke messen, die von einem bestimmten Punkt der Maschine zurückgelegt wird. Besonders vorteilhaft ist es, wenn der Sensor als analoge Zustandsgröße die Schwingungsfrequenz eines bestimmten Bauteils (z.B. eines Wälzlagers) der zu überwachenden Maschine misst, da sich ein Bauteilversagen oftmals vorzeitig durch ein verändertes Schwingungsverhalten ankündigt. Weiterhin besteht die Möglichkeit, dass bei einer Schwingungsmessung die Schwingungsamplitude gemessen wird. Weitere mögliche Zustandsgrößen, die im Rahmen der Erfindung gemessen werden können, sind eine Bauteildehnung und/oder eine Bauteilneigung.

Vorzugsweise sind die einzelnen Sensormodule der zu überwachenden Maschine von der Auswertungseinheit individuell und selektiv adressierbar, wozu die einzelnen Sensormodule vorzugsweise jeweils eine individuelle Identifikationsnummer aufweisen.

Die Datenübertragung zwischen den einzelnen Sensormodulen und der zentralen Auswertungseinheit kann über verschiedene digitale Leitungssysteme oder Datenbustypen erfolgen. Beispielsweise kann die Datenübertragung über einen Ethernet-Bus, einen Can-Bus, einen Firewire-Bus, einen TTP-Bus, ein Wireless-LAN, über Industriefunk, über einen Modbus, einen Profibus oder über einen sogenannten SafetyBUS p. erfolgen. Die Erfindung ist jedoch hinsichtlich der Datenübertragung zwischen den einzelnen Sensormodulen und der zentralen Auswertungseinheit nicht auf die vorstehend genannten Bustypen beschränkt, sondern grundsätzlich auch mit anderen digitalen Leitungssystemen bzw. Bustypen realisierbar.

Weiterhin besteht im Rahmen der Erfindung wahlweise die Möglichkeit einer drahtlosen oder einer drahtgebundenen Datenübertragung zwischen den einzelnen Sensormodulen und der Auswertungseinheit.

Ferner ist zu erwähnen, dass die Erfindung nicht nur die vorstehend beschriebenen Sensormodule als einzelne Bauteile umfasst, sondern auch ein komplettes Sensornetzwerk mit mehreren Sensormodulen und der bereits vorstehend erwähnten zentralen Auswertungseinheit.

Der Datenbus zwischen den einzelnen Sensormodulen und der zentralen Auswertungseinheit kann hierbei verschiedene Bus-Topologien aufweisen, wie beispielsweise eine Ring-Topologie, eine Stern-Topologie, eine Linien-Topologie oder eine Baum-Topologie.

Weiterhin ist in dem bevorzugten Ausführungsbeispiel der Erfindung vorgesehen, dass die zentrale Auswertungseinheit baulich in die zu überwachende Maschine integriert ist. Hinsichtlich des Montageorts der zentralen Überwachungseinheit bietet die Erfindung einen größeren konstruktiven Gestaltungsspielraum als der Stand der Technik, da durch die Erfindung die Störsicherheit der Datenübertragung zwischen den einzelnen Sensormodulen und der zentralen Auswertungseinheit verbessert wird. Die zentrale Auswertungseinheit wird deshalb im Rahmen der Erfindung vorzugsweise in der zu überwachenden Maschine an einem Montageort montiert, an dem im Betrieb der Maschine weniger raue Umgebungsbedingungen herrschen als an dem Montageort der einzelnen Sensormodule. Hierbei besteht die Möglichkeit, dass an dem Montageort der einzelnen Sensormodule Umgebungsbedingungen herrschen, die außerhalb des zulässigen Arbeitsbereichs der Auswertungseinheit liegen, wohingegen an dem Montageort der Auswertungseinheit Umgebungsbedingungen herrschen, die innerhalb des zulässigen Arbeitsbereichs der Auswertungseinheit liegen.

Darüber hinaus ist im Rahmen der Erfindung vorzugsweise vorgesehen, dass die zentrale Auswertungseinheit in der Maschine telematisch abgefragt werden kann, beispielsweise über das normale leitungsgebundene oder mobile Telefonnetz oder über sonstige Datenleitungen. Das erfindungsgemäße Sensornetzwerk weist deshalb vorzugsweise eine weitere Datenschnittstelle auf, um die Auswertungseinheit mit einem großräumigen Datennetz (z.B. Telefonnetz) zu verbinden.

Ferner ist zu erwähnen, dass sich die Erfindung nicht nur zur Überwachung von Windenergieanlagen eignet, sondern auch die Überwachung anderer Maschinen ermöglicht, wie beispielsweise von Blechwalzwerken.

Schließlich ist zu erwähnen, dass die Erfindung auch ein entsprechendes Überwachungsverfahren umfasst, wie sich bereits aus der vorstehenden Beschreibung ergibt.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert. Es zeigen:
- Figur 1: eine schematische Darstellung einer Windenergieanlage mit einem erfindungsgemäßen Condition-Monitoring-System (CMS) sowie
- Figur 2: ein vereinfachtes Blockdiagramm des Condition-Monitoring-System in der Windenergieanlage gemäß Figur 1.

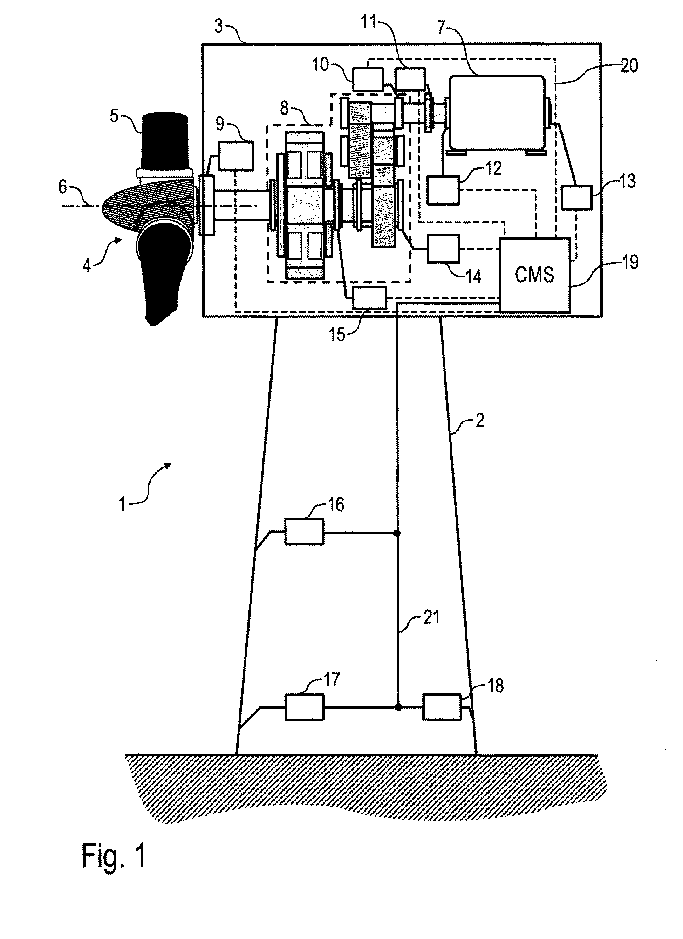

Figur 1 zeigt eine schematische Darstellung einer Windenergieanlage 1 mit einem Turm 2, einer Maschinengondel 3 und einem Rotor 4 mit mehreren Rotorblättern 5, wobei der Rotor 4 um eine horizontale Drehachse 6 drehbar ist.

In der Maschinengondel 3 befindet sich ein Generator 7, der über ein gestrichelt umrandetes Getriebe 8 von dem Rotor 4 angetrieben wird und elektrischen Strom zur Einspeisung in ein Stromnetz erzeugt, was an sich aus dem Stand der Technik bekannt ist.

Weiterhin weist die Windenergieanlage 1 ein sogenanntes Condition-Monitoring-System (CMS) auf, um den Zustand der Windenergieanlage 1 zu überwachen und ein drohendes Bauteilversagen frühzeitig zu erkennen, bevor ein Schaden auftritt.

Das CMS besteht im Wesentlichen aus zahlreichen Sensormodulen 9-18 und einer zentralen Überwachungseinheit 19.

Die Sensormodule 9-15 sind in der Maschinengondel 3 angeordnet und mit der zentralen Auswertungseinheit 19 über gestrichelt dargestellte Digitalleitungen 20 oder einen digitalen Datenbus verbunden.

Die anderen Sensormodule 16-18 sind dagegen in dem Turm 2 der Windenergieanlage 1 angeordnet und mit der zentralen Auswertungseinheit 19 über einen digitalen Datenbus 21 verbunden.

Die Sensormodule 9-15 in der Maschinengondel 3 messen Maschinenschwingungen an verschiedenen Lagerstellen innerhalb der Maschinengondel 3.

Die in dem Turm 2 angeordneten Sensormodule 16-18 messen dagegen Neigungswinkel und Dehnungen in dem Turm 2, um die mechanische Belastung und Standfestigkeit des Turms 2 zu überwachen.

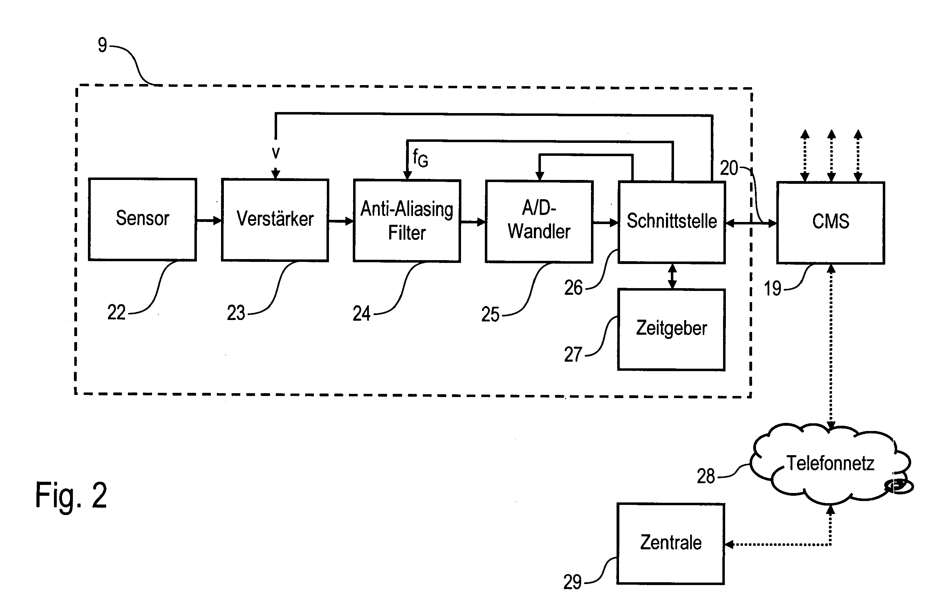

Figur 2 zeigt beispielhaft und in vereinfachter Form den Aufbau des Sensormoduls 9, wobei die anderen Sensormodule 10 bis 18 grundsätzlich in der selben Weise aufgebaut sind und deshalb nicht näher beschrieben werden müssen.

Das Sensormodul 9 weist zur Messung einer analogen Zustandsgröße der Windenergieanlage 1 einen Sensor 22 oder einen Signaleingang auf, wobei der Sensor 22 in diesem Ausführungsbeispiel Maschinenschwingungen an einem Lager der Welle des Rotors 4 breitbandig misst, um rechtzeitig einen Lagerschaden feststellen zu können.

Der Sensor 22 ist ausgangsseitig mit einem Verstärker 23 verbunden, der das analoge Ausgangssignal des Sensors 22 mit einem einstellbaren Verstärkungsfaktor v verstärkt, wobei die Einstellung des Verstärkungsfaktors v noch detailliert beschrieben wird.

Der Verstärker 23 ist ausgangsseitig mit einem Anti-Aliasing-Filter 24 verbunden, welches das verstärkte Ausgangssignal des Sensors 22 vor einer anschließenden Digitalisierung mit einer Grenzfrequenz f_{G} in herkömmlicher Weise filtert, um Digitalisierungsfehler zu vermeiden.

Das Anti-Aliasing-Filter 24 ist ausgangsseitig mit einem Analog/Digital-Wandler 25 verbunden, der das verstärkte und mehrfach gefilterte analoge Ausgangssignal des Sensors 22 in ein digitales Sensorsignal umwandelt, das dann an eine digitale Schnittstelle 26 weiterqegeben wird.

Die digitale Schnittstelle 26 überträgt das digitale Sensorsignal dann bei einer Abfrage durch die zentrale Auswertungseinheit 19 über die Digitalleitung 20 bzw. über den Datenbus 21 zu der zentralen Auswertungseinheit 19.

Darüber hinaus weist das Sensormodul 9 einen integrierten Zeitgeber 27 auf, der ein Zeitsignal erzeugt, das von der Schnittstelle 26 zusammen mit den digitalen Sensordaten zu der Auswertungseinheit 19 übertragen wird. Dies ermöglicht es der Auswertungseinheit 19, die digitalisierten Sensordaten der Sensormodule 9-18 in zeitlich synchronisierter Form korreliert zu untersuchen.

Darüber hinaus ermöglicht die zentrale Auswertungseinheit 19 über die Digitalleitung 20 und die Schnittstelle 26 eine Einstellung des Verstärkungsfaktors v, der Grenzfrequenz f_{G} und der Betriebsparameter des Analog/Digital-Wandlers 25 sowie eine Synchronisierung des Zeitgebers 27.

Die Auswertungseinheit 19 ist wiederum über ein herkömmliches Telefonnetz 28 mit einer Zentrale 29 verbunden, die eine Vielzahl von Windenergieanlagen 1 überwachen kann, indem jeweils über das Telefonnetz 28 eine Datenverbindung zu der zugehörigen Auswertungseinheit 19 hergestellt wird. Bei dem Telefonnetz 28 kann es sich beispielsweise um ein herkömmliches Festnetz oder um ein Mobilfunknetz handeln, jedoch können zur Fernabfrage der Auswertungseinheit 28 auch andere Datennetze eingesetzt werden.

Vorteilhaft hierbei ist es, dass die Datenübertragung zwischen den einzelnen Sensormodulen 9-18 und der zentralen Auswertungseinheit 19 in digitaler Form erfolgt, wodurch die Störsicherheit der Datenübertragung wesentlich erhöht wird.

Die erhöhte Störsicherheit ermöglicht wiederum größere Übertragungsstrecken zwischen den einzelnen Sensormodulen 9-18 und der zentralen Auswertungseinheit 19, so dass hinsichtlich des Montageorts der zentralen Auswertungseinheit 19 innerhalb der Maschinengondel 3 größere konstruktive Gestaltungsspielräume bestehen.

Die Erfindung ist nicht auf das vorstehend beschriebene bevorzugte Ausführungsbeispiel beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichenliste:

- 1: Windenergieanlage
- 2: Turm
- 3: Maschinengondel
- 4: Rotor
- 5: Rotorblätter
- 6: Drehachse
- 7: Generator
- 8: Getriebe
- 9-18: Sensormodule
- 19: Auswertungseinheit
- 20: Digitalleitung oder Datenbus
- 21: Datenbus
- 22: Sensor
- 23: Verstärker
- 24: Anti-Aliasing-Filter
- 25: Analog/Digital-Wandler
- 26: Schnittstelle
- 27: Zeitgeber
- 28: Telefonnetz
- 29: Zentrale

## Patentansprüche

1. Sensormodul (9-18) zur Zustandsüberwachung einer Maschine (1), insbesondere einer Windkraftanlage, mit
a) mindestens einem Sensor (22) oder einem Sensoreingang zur Messung einer analogen Zustandsgröße der Maschine (1) und zur Abgabe von Sensordaten, welche die gemessene Zustandsgröße der Maschine (1) wiedergeben, und
b) einer Datenschnittstelle (26) zur Übertragung der Sensordaten zu einer separaten und räumlich getrennten Auswertungseinheit (19),
**gekennzeichnet durch**
c) einen Analog/Digital-Wandler (25), der mit dem Sensor (22) und mit der Datenschnittstelle (26) verbunden ist und die gemessene analoge Zustandsgröße in die digitalen Sensordaten konvertiert.

2. Sensormodul (9-18) nach Anspruch 1, **gekennzeichnet durch** einen Verstärker (23) zur Verstärkung der analogen Zustandsgröße.

3. Sensormodul (9-18) nach Anspruch 2, **dadurch gekennzeichnet, dass** der Verstärker (23) einen einstellbaren Verstärkungsfaktor (v) aufweist, wobei der Verstärkungsfaktor (v) über die Datenschnittstelle (26) von der Auswertungseinheit (19) einstellbar ist.

4. Sensormodul (9-18) nach einem der vorhergehenden Ansprüche, **gekennzeichnet durch** ein Anti-Aliasing-Filter (24), das dem Analog/Digital-Wandler (25) vorgeschaltet ist.

5. Sensormodul (9-18) nach Anspruch 4, **dadurch gekennzeichnet, dass** das Anti-Aliasing-Filter (24) eine einstellbare Filterfrequenz (f_{G}) aufweist, wobei die Filterfrequenz (f_{G}) über die Datenschnittstelle (26) von der Auswertungseinheit (19) einstellbar ist.

6. Sensormodul (9-18) nach einem der vorhergehenden Ansprüche, **gekennzeichnet durch** einen Zeitgeber (27), der ein Zeitsignal erzeugt, das mit den Sensordaten zu der Auswertungseinheit (19) übertragen wird.

7. Sensormodul (9-18) nach Anspruch 6, **dadurch gekennzeichnet, dass** der Zeitgeber (27) über die Datenschnittstelle (26) von der Auswertungseinheit (19) synchronisierbar ist.

8. Sensormodul (9-18) nach einem der vorhergehenden Ansprüche, **gekennzeichnet durch** eine breitbandige Messung der analogen Zustandsgröße **durch** den Sensor (22).

9. Sensormodul (9-18) nach einem der vorhergehenden Ansprüche, **gekennzeichnet durch** eine Stromversorgung von der Auswertungseinheit (19).

10. Sensormodul (9-18) nach einem der vorhergehenden Ansprüche, **dadurch gekennzeichnet, dass** der Sensor (22) eine oder mehrere der folgenden Zustandsgrößen der Maschine (1) misst:
a) Beschleunigung,
b) Geschwindigkeit,
c) Wegstrecke,
d) Schwingungsamplitude,
e) Dehnung,
f) Neigung.

11. Sensormodul (9-18) nach einem der vorhergehenden Ansprüche, **dadurch gekennzeichnet, dass** das Sensormodul (9-18) von der Auswertungseinheit (19) individuell und selektiv adressierbar ist.

12. Sensormodul (9-18) nach einem der vorhergehenden Ansprüche, **dadurch gekennzeichnet, dass** die Datenschnittstelle (26) eine der folgenden Datenbustypen unterstützt:
a) Ethernet-Bus, insbesondere industrial Ethernet-Bus,
b) Can-Bus,
c) Firewire-Bus.
d) TTP-Bus,
e) Wireless-LAN,
f) Industriefunk,
g) Modbus,
h) Profibus,
i) SafetyBUS p.

13. Sensormodul (9-18) nach einem der vorhergehenden Ansprüche, **dadurch gekennzeichnet, dass** die Datenschnittstelle (26) eine drahtlose Datenübertragung oder eine leitungsgebundene Datenübertragung zwischen dem Sensormodul (9-18) und der Auswertungseinheit (19) ermöglicht.

14. Sensornetzwerk zur Zustandsüberwachung einer Maschine (1), insbesondere einer Windkraftanlage, mit
a) mindestens einem Sensormodul (9-18) mit einem Sensor (22) zur Messung einer analogen Zustandsgröße der Maschine (1) und einer Datenschnittstelle (26) zur Übertragung von Sensordaten, welche die gemessene Zustandsgröße wiedergeben,
b) einer zentralen Auswertungseinheit (19) zur Auswertung der Sensordaten, die von dem Sensormodul (9-18) übertragen werden, und
c) einer Datenleitung (20, 21) zur Datenübertragung der Sensordaten von dem Sensormodul (9-18) zu der Auswertungseinheit (19),
**dadurch gekennzeichnet, dass**
d) das Sensormodul (9-18) einen Analog/Digital-Wandler (25) enthält, der mit dem Sensor (22) und der Datenschnittstelle (26) verbunden ist und die gemessene analoge Zustandsgrößen in die digitalen Sensordaten konvertiert, und
e) die Datenleitung (20, 21) eine digitale Datenleitung ist, welche die Sensordaten in digitaler Form von dem Sensormodul (9-18) zu der Auswertungseinheit (19) überträgt.

15. Sensornetzwerk nach Anspruch 14, **dadurch gekennzeichnet, dass** die digitale Datenleitung (20, 21) ein Datenbus (21) mit einer der folgenden Topologien ist:
a) Ring-Topologie,
b) Stern-Topologie,
c) Linien-Topologie,
d) Baum-Topologie.

16. Sensornetzwerk nach einem der Ansprüche 14 bis 15, **dadurch gekennzeichnet, dass** die Auswertungseinheit (19) baulich in die Maschine (1) integriert ist.

17. Sensornetzwerk nach Anspruch 16, **dadurch gekennzeichnet, dass** die Auswertungseinheit (19) in der zu überwachenden Maschine (1) an einem Montageort montiert ist, an dem im Betrieb der Maschine (1) weniger rauhe Umgebungsbedingungen herrschen als an dem Montageort der einzelnen Sensormodule (9-18).

18. Sensornetzwerk nach Anspruch 17,
**dadurch gekennzeichnet,**
a) **dass** an dem Montageort der einzelnen Sensormodule (9-18) Umgebungsbedingungen herrschen, die außerhalb des zulässigen Arbeitsbereichs der Auswertungseinheit (19) liegen und
b) **dass** an dem Montageort der Auswertungseinheit (19) Umgebungsbedingungen herrschen, die innerhalb des zulässigen Arbeitsbereichs der Auswertungseinheit (19) liegen.

19. Sensornetzwerk nach einem der Ansprüche 14 bis 18, **dadurch gekennzeichnet, dass** die überwachte Maschine (1) eine Windkraftanlage ist.

20. Sensornetzwerk nach einem der Ansprüche 14 bis 19, **dadurch gekennzeichnet, dass** die Datenschnittstelle (26) eine drahtlose Datenübertragung oder eine leitungsgebundene Datenübertragung zwischen dem Sensormodul (9-18) und der Auswertungseinheit (19) ermöglicht.

21. Sensornetzwerk nach einem der Ansprüche 14 bis 20, **dadurch gekennzeichnet, dass** die Datenschnittstelle (26) eine der folgenden Datenbustypen unterstützt:
a) Ethernet-Bus, insbesondere industrial Ethernet-Bus,
b) Can-Bus,
c) Firewire-Bus.
d) TTP-Bus,
e) Wireless-LAN,
f) Industriefunk,
g) Modbus,
h) Profibus,
i) SafetyBUS p.

22. Sensornetzwerk nach einem der Ansprüche 14 bis 21, **gekennzeichnet durch** einen Zeitgeber (27) zur Ermöglichung einer späteren Synchronisierung der Sensordaten verschiedener Sensormodule (9-18) in der Auswertungseinheit (19).

23. Sensornetzwerk nach einem der Ansprüche 14 bis 22, **dadurch gekennzeichnet, dass** der Sensor (22) eine oder mehrere der folgenden Zustandsgrößen misst:
a) Beschleunigung,
b) Geschwindigkeit,
c) Wegstrecke,
d) Schwingungsamplitude,
e) Dehnung,
f) Neigung.

24. Übwachungsverfahren für eine Maschine (1), insbesondere eine Windkraftanlage, mit den folgenden Schritten:
a) Messung mindestens einer analogen Zustandsgröße der zu überwachenden Maschine (1) mittels eines Sensors (22) in einem Sensormodul (9-18),
b) Übertragung von Sensordaten von dem Sensormodul (9-18) zu einer Auswertungseinheit (19), wobei die Sensordaten die gemessene Zustandsgröße wiedergeben,
c) Auswertung der übertragenen Sensordaten in der Auswertungseinheit (19),
**gekennzeichnet durch** folgenden Schritt:
d) Analog/Digital-Wandlung der gemessenen Zustandsgrößen in die digitalen Sensordaten in dem Sensormodul (9-18), so dass die Sensordaten in digitaler Form zu der Auswertungseinheit (19) übertragen werden.

25. Überwachungsverfahren nach Anspruch 24,
**gekennzeichnet durch** folgende Schritte:
a) Transformation der Sensordaten in der Auswertungseinheit (19) aus dem Zeitbereich in den Frequenzbereich,
b) Auswertung der Sensordaten in dem Frequenzbereich zur Erkennung eines Maschinenschadens.

26. Überwachungsverfahren nach einem der Ansprüche 24 bis 25, **gekennzeichnet durch** folgenden Schritt:
Zeitliche Synchronisation der Sensordaten verschiedener Sensoren in der Auswertungseinheit (19).

27. Überwachungsverfahren nach einem der Ansprüche 24 bis 26, **dadurch gekennzeichnet, dass** die Sensordaten drahtlos oder leitungsgebunden von den Sensoren zu der Auswertungseinheit (19) übertragen werden.

28. Überwachungsverfahren nach einem der Ansprüche 24 bis 27, **dadurch gekennzeichnet, dass** die einzelnen Sensoren von der Auswertungseinheit (19) individuell und selektiv abgefragt werden.

29. Überwachungsverfahren nach einem der Ansprüche 24 bis 28, **gekennzeichnet durch** folgende Schritte:
a) Verstärkung der analogen Zustandsgröße in dem Sensormodul (9-18) **durch** eine Verstärkung mit einem einstellbaren Verstärkungsfaktor,
b) Ferneinstellung des Verstärkungsfaktors von der Auswertungseinheit (19) aus.

30. Überwachungsverfahren nach einem der Ansprüche 24 bis 29, **gekennzeichnet durch** folgende Schritte:
a) Anti-Aliasing-Filterung der analogen Zustandsgröße in dem Sensormodul (9-18) mit einer einstellbaren Filterfrequenz vor der Analog/Digital-Wandlung,
b) Ferneinstellung der Filterfrequenz von der Auswertungseinheit (19) aus.
